# EUROPEAN PATENT SPECIFICATION

(11) **EP 1 609 366 B1**
(45) Date of publication and mention of the grant of the patent: **16.05.2007**
(21) Application number: 04253842.1
(22) Date of filing: 25.06.2004
(51) Int. Cl.: A22C 11/00

(54) **Cutting device and method for cutting connecting parts of chained sausages**
Schneidevorrichtung für Verbindungsteile von Wurstketten
Dispositif et méthode pour couper des saucisses d'un chapelet de saucisses

(43) Date of publication of application: 28.12.2005
(73) Proprietor: Prima Meat Packers, Ltd., Tokyo 140-8529 (JP)
(72) Inventor: Samusawa, Shinji c/o Meat Packers, Ltd, Ibaraki, 300-0841 (JP); Takahashi,Takayuki c/o Meat Packers, Ltd, Ibaraki, 300-0841 (JP); Fujita, Kazuo c/o Meat Packers, Ltd, Ibaraki, 300-0841 (JP)
(74) Representative: Illingworth-Law, William Illingworth

(56) References cited:
- DE-A- 10 213 398
- US-A- 6 045 445
- US-A- 6 106 878
- PATENT ABSTRACTS OF JAPAN vol. 0165, no. 73 (M-1344), 14 December 1992 (1992-12-14) & JP 4 223900 A (PRIMA MEAT PACKERS LTD), 13 August 1992 (1992-08-13)

## Description

The present invention relates to a cutting device for cutting connecting parts of chained sausages, a method for manufacturing a link of each sausage or a link connected body by using the cutting device, and a link of each sausage or a link connected body which is obtained from the method for manufacturing, having no twisting back after being cut.

### Background Art

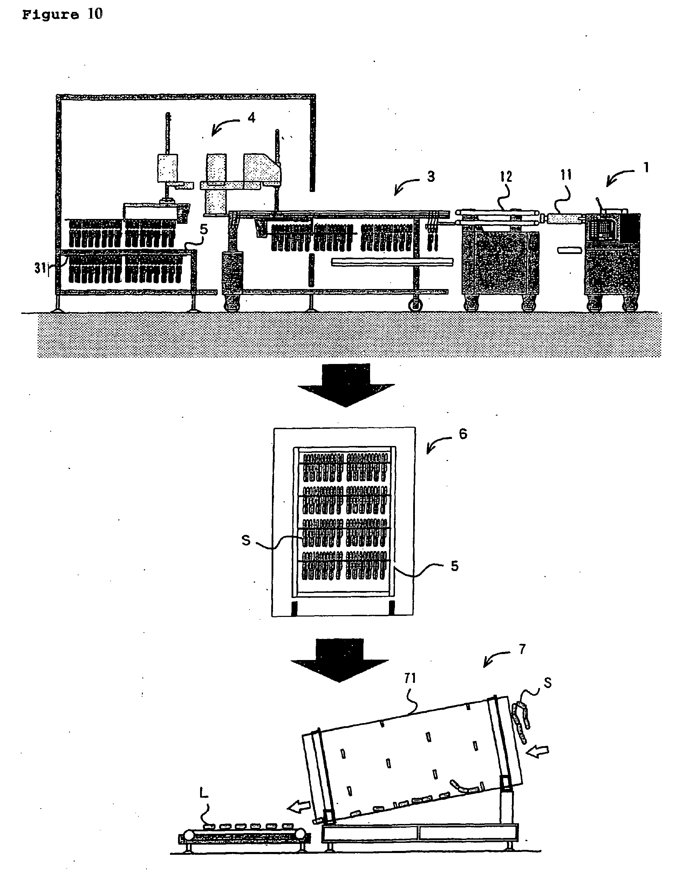

Manufacture of a sausage generally comprises the following steps, as it is shown in Fig. 10; the filling step wherein sausage dough is pushed out into a natural intestine or an artificial edible casing, and by filling a fixed amount with a filling device 1 and by twisting at the same time, chained sausages are formed; the suspending step wherein chained sausages are arranged and conveyed from a discharge port 11 of the filling device by a conveyor 2 and that a certain number of loops of chained sausages are suspended on a suspension rod 31 by a suspending means 3; the placing step wherein the suspension rod 31 is hung in a dolly for heat-treatment 5 by a transferring means 4; the heating step wherein the looped sausages are heat treated together with the dolly 5; and the cutting step wherein heated chained sausages are separated one by one with a cutting means 7. As for the above-mentioned cutting step, heretofore, a method to separate many chained sausages into each sausage product with a drum cutter 71, as it is shown in Fig. 10 (See, for example, Japanese Laid-Open Patent Application No. 1995-75997, Japanese Laid-Open Patent Application No.1997- 28280), and a method to separate chained sausages one by one with a cutting blade, a nipping type cutting tool or the like are well known (See, for example, Japanese Laid-Open Patent Application No. 1990-190296, Japanese Laid-Open Patent Application No. 1999-266779, Japanese Laid-Open Patent Application No. 2000-152745).

The drum cutter has a mechanism which hangs connecting parts of chained sausages on many of the blades installed inside the drum in a random order and separates them one by one by a torque of the drum. When the chain of sausages was long, more rotation was required to separate all sausages and by increasing the number of rotations, sausage products inside the drum were subjected to a dropping movement repeatedly. As a result, not only sausage products were more damaged, but it happened that some sausage products were not cut at connecting parts and some sausage products came out being connected by two or three from the drum cutter. Moreover, when cutting with the drum cutter, as the chained sausages were bunched up together especially immediately after throwing, the degree of freedom of the sausages inside the drum cutter was deprived, chained sausages bumped against a blade receiving jig projecting inside the drum cutter, and it happened that breakage or rupture of the products occurred or that some products were torn off by pulling, not by cutting.

In cutting by using a nipping type cutting tool, there were problems that sausages were curved irregularly during the heat-treatment step and the intervals of connecting parts became irregular. As a result, by cutting mechanically at a prescribed interval, some sausages were damaged and defective products were made. Therefore, in such cutting device, it was necessary to provide a sensor which detects connecting parts of chained sausages and a driving device which drives by receiving a signal from the sensor, which made the structure complicated. Furthermore in a cutting device which cuts chained sausages in a suspended state by rotating blades, some times the cutting was insufficient or sausages were damaged as connecting parts of sausages were often supported slightly off from the suspending rod. Furthermore, as the function of the filling machine is improving significantly, more efficient manufacturing steps of sausages including speeding up, automation or the like of the manufacturing steps of sausages are required. However none of the above-mentioned method for manufacturing or device was satisfactory in this point.

On the other hand, not only the standard of a natural intestine is irregular, but it has properties of easily breaking, connecting parts being uneven between sausages, easily twisting back, easily sticking together and the like. When sausages are stuck together, it becomes difficult to insert the suspending rod into the loops of chained sausages during the suspending step. The problems occur that some sausages are damaged at the end of the suspension rod, or during the smoking step, uneven smoke is apt to occur. Therefore a method for manufacturing wherein cutting-treatment to cut chained sausages one by one is carried out after the filling step, followed by heat treatment is carried out, is also known. In this method for manufacturing, however, there is the problem that in case a natural intestine which has a property of easily twisting back is used, especially, the cut part twists back, the end part of the link of each sausage opens and that the sausage dough overflows. Thus, a method wherein connecting parts are cut after being previously hardened is proposed. For example, the method for manufacturing sausages wherein kneaded meat is filled into a casing, soaked to warm water to denature protein around the surface, and then a twisting-cut-treatment is carried out followed by a smoking treatment (See Japanese Laid-Open Patent Application No. 1995-39295), or a method for manufacturing sausages wherein meat is filled into casing which is twisted sequentially with intervals, a filled part wherein the front and rear part are divided by the twisted section part is formed sequentially, and at the same time the twisted section part are cut sequentially, the filled part being cut is exposed to warm water of 50-80°C for 1 to 3 minutes, or to moisture of 50-80°C for 30 seconds to 5 minutes, and heated in a smoking furnace (Japanese Laid-Open Patent Application No. 2002-306058), are known. Moreover, a method of cutting chained sausages after freezing is also known (See Japanese Laid-Open Patent Application No. 1990-203767).

As raw sausages are not generally heat treated, similarly with the above-mentioned method the filling step is carried out before the cutting step. Various methods for manufacturing or devices of raw sausages, for example, a method wherein after sausage dough is filled into a natural intestine, connecting parts of sausages are cut being pinched between the conveyor by a separating member or the like, are known (See Japanese Laid-Open Patent Application No. 1999-313603, Japanese Laid-Open Patent Application No. 1983-9645, Japanese Laid-Open Patent Application No. 1996-256675). None of the device, however, can prevent completely the cut parts of the manufactured sausages to be opened and that the sausage dough overflows, and at the same time cleaning and maintenance are difficult due to the complicated structure of the device. Therefore, a sausage which does not use casing, or which uses less twisting back artificial casing is proposed (Japanese Laid-Open Patent Application No. 1998-77415).

As a cutting device which separates chained sausages one by one without using mechanical cutting device, the efficacy of the laser beam irradiation or the microwave irradiation is known (See, for example, Japanese Laid-Open Patent Application No. 1996-256675). In the cutting device using laser beam, it is necessary to provide a detect means which detects connecting parts of chained sausages and a laser irradiation means which irradiates laser beam to connecting parts. However there is an advantage when the laser beam is used, a natural intestine or an artificial casing is jointed at the cutting part. Therefore it can prevent the sausage dough from overflowing from the cutting part (See U.S. 6106878).

The applicant has filed many applications relating to the methods for manufacturing sausages and devices and as a cutting method for separating chained sausages one by one, proposed a device wherein connecting parts of chained sausages were cut continuously by contacting and pressuring a rotating cutting blade to connecting parts of sausages being suspended by a suspending member (See Japanese Laid-Open Patent Application No. 2002-86386), or a device wherein connecting parts of chained sausages were heat fusion cut by blowing hot air to connecting parts after connecting parts of chained sausages being supported by a hook for cutting (See Japanese Laid-Open Patent Application No. 2000-139331, Japanese Laid-Open Patent Application No. 2002-330695). Furthermore, the applicant proposed a method or the device of cutting wherein waterdrops adhering to connecting parts are at least removed, then microwave is irradiated to cut sausages (See Japanese Patent Publication No. 1994-94120). This method utilizes the property of microwave that a column-shape object is heated from both ends, so that when microwave is irradiated to the chained sausages, the temperature rises from both ends of sausages and both ends and connecting parts of sausages are burnt strongly and cut. As sausages are heated as a whole and cooked brown, sausage dough does not overflow.

### Disclosure of the Invention

If it is possible to prepare a link of each sausage by cutting connecting parts of chained sausages wherein sausage dough is pushed out into a natural intestine or an artificial edible casing, and by filling a fixed amount and by twisting at the same time, chained sausages are formed, manufacturing steps of; the suspending step wherein chained sausages are made into a prescribed number of loops and are hung on a suspending rod by a suspending means; the placing step wherein a suspending rod is hung on a dolly for heat-treatment by a transferring means; the cutting step wherein a drum cutter cuts off heated chained sausages into a link one by one, become unnecessary and therefore significant laborsaving and increased productivity can be realized. With a technology which has been proposed so far according to Japanese Laid-Open Patent Application No. 1999-313603 and the like, wherein chained sausages are formed, connecting parts of chained sausages are cut, and a link of each sausage is prepared, twisting back occurs after cutting, and it is impossible to prevent completely sausage dough from overflowing by an opening from the cutting parts and no method in practical use has been reported heretofore. Moreover by a method with heating from outside according to Japanese Laid-Open Patent Application No. 2002-306058 and the like, adhesiveness between natural intestine and sausage dough is bad, and there is a problem that the cutting parts open. Therefore, this method also has not been put to practical use.

Embodiments of the invention may provide a practical fusion cutting device for cutting connecting parts of chained sausages, wherein the connecting part of the chained sausages are fusion cut after the chained sausages are formed, that can prepare at good yield, with a high speed and a simple way, a link of each sausage having no twisting back after fusion cutting, wherein sausage dough is prevented completely from being overflowed by an opening from the fusion cut part, so that can realize a significant laborsaving and improved productivity; and a method for manufacturing a link of each sausage or a link connected body by using the fusion cutting device, and the like.

The present inventors have found that after forming chained sausages by pushing out sausage dough into a natural intestine, by filling a fixed amount and twisting at the same time with the filling device, and during the step wherein chained sausages were arranged and conveyed from the discharge port by a conveyance conveyor, by contacting electrodes to the two links connected through connecting parts between sausages, and by conducting current applying treatment (200V, 50mA, 50Hz) between the links, connecting parts were burnt/fusion cut (electrically cut) instantly, and it was possible to manufacture at a high speed and continuously a link of each sausage wherein the end part of the link had an umbilicate form of 1-2 mm or that end part hardly existed, having no twisting back, and that sausage dough did not overflow by being opened from the fusion cut part, and have confirmed that a fusion cutting treatment of connecting parts between chained sausages could be surely carried out by detecting a current-carrying condition between the electrodes through an electric current detecting sensor installed in a circuit, and by controlling in such a way that a driving of the conveyance conveyor of chained sausages and an current applying treatment between the electrodes are synchronized based on an output signal from the electric current detecting sensor. The present invention has been thus completed.

According to one aspect of the present invention there is provided a device for separating linked sausages, comprising a conveying means for conveying linked sausages which are individually connected by connecting parts, characterized in that the device is provided with: plural electrodes placed at a prescribed interval, to contact respectively with plural links which are connected by connecting parts of linked sausages being conveyed; and an electric power source to conduct electric current between links by the electrodes. The conveying means may be a conveyance conveyor installed horizontally. The device may comprise electrodes to contact with two adjacent links, respectively. The electrodes to contact with two adjacent links respectively may be placed on both sides of an insulating part in between and may have a constitution that the two electrodes can contact with the two adjacent links respectively, when the insulating part is attached by insertion to a connecting part of linked sausages. The electric power source may be a three-phase alternating current electric power source. The device may further comprise a separation detecting mechanism which can detect whether the separation of a connecting part between linked sausages is being carried out or not by the condition of electric current conduction between the electrodes. The device may further comprise a controlling mechanism that controls so that electric current is conducted again between links when an output result from the separation detecting mechanism shows that "the electric current is on", and that linked sausages conveyed by the conveying means when the output result from the separation detecting mechanism shows that "the electric current is off". Embodiments may include a machine for manufacturing sausages having a device for separating linked sausages as described above. The machine may include a filling device installed in the upstream side of the separation device which forms linked sausages by pushing out and filling a fixed amount of sausage dough into a natural intestine or an artificial edible casing, and by twisting the casing at the same time; and a heat treatment device for sausage links installed in the downstream side of the separation device.

Aspects of the present invention may also relate to a method for manufacturing an individual or a prescribed number of connected-link body of sausage wherein individual sausage links are connected by connecting parts, by separating the connecting parts between the links of linked sausages being conveyed characterised in that the individual link or a connected-link body of sausage is manufactured by conducting an electric current between the links with plural electrodes to contact respectively with plural links connected by connecting parts of linked sausages. The connecting part between two links may be separated by conducting electric current to electrodes contacting with two adjacent links, respectively. 50-800 volts may be applied between links. Alternatively, 100-300 volts may be applied between links. The separation may be continuously carried out during a conveying step. The linked sausages may be unheated linked sausages. The sausages may be Vienna sausages with sheep guts casings.

The connecting part between the links may be burnt down so that an end part of the link is in 1-2mm umbilicate form, or the end part of the link hardly exists. The end part of the link may be hardened from inside and does not twist back.

### Brief Description of Drawing

Fig. 1 is a view showing a manufacturing step of sausages by using an (intermittent) fusion cutting device of the present invention.
Fig. 2 is a view showing a manufacturing step of sausages by using a (continuous) fusion cutting device of the present invention.
Fig. 3 is a view showing a fusion cutting device of the present invention (a: side view, b: plan view).
Fig. 4 is a view showing another embodiment of a fusion cutting device of the present invention.
Fig. 5 is a view showing another embodiment of a fusion cutting device of the present invention.
Fig. 6 is a view showing further another embodiment of a fusion cutting device of the present invention.
Fig. 7 is a view showing a controlling flow of a fusion cutting device of the present invention shown in Fig. 5.
Fig. 8 is a view showing a fusion cutting device of the present invention having three electrodes connected to a three-phase alternating current electric power (a) or a single-phase alternating current electric power (b).
Fig. 9 is a view showing shapes of end parts of links of sausages (a: present invention, b: conventional method).
Fig. 10 is a view showing conventional manufacturing steps of sausages.

### Explanation of letters or numerals

1. a filling device
11. a discharge port of a filling device
2. a conveyance conveyor
21. a chain conveyor
22. a belt conveyor
8. a fusion cutting device installed on a conveyance conveyor 81. an electrode
82. an electric power
83. an insulating part
84. an electric current detecting sensor
9. a transferring conveyor
10. a heat-treatment device
101. a dry zone
102. a smoke zone
103. a cook zone
104 a shower cooling zone
S. chained sausages
L. links
C. connecting parts of chained sausages

### Best Mode of Carrying Out the Invention

As for a fusion cutting device for cutting connecting parts of chained sausages of the present invention, it is not particularly limited as long as it is a fusion cutting device that fusion cuts connecting parts between links of chained sausages wherein the link of each sausage is connected through connecting parts, comprising a conveying means of chained sausages; plural electrodes placed at a prescribed interval to contact with plural links connected through connecting parts of chained sausages to be conveyed, respectively; and an electric power to conduct electric current between links by the electrodes. Furthermore, as for a method for manufacturing a link of each sausage or a link connected body of the present invention, it is not particularly limited as long as it is a method for manufacturing a link of each sausage or a prescribed number of a link connected bodies that fusion cuts connecting parts between links of chained sausages wherein the link of each sausage is connected through connecting parts, and that conducts electric current between links by plural electrodes which contact with plural links connected through connecting parts of chained sausages to be conveyed, respectively. However, by using the above-mentioned fusion cutting device of the present invention, a link of each sausage or a link connected body can be manufactured advantageously.

As for the above-mentioned conveying means, it is not particularly limited as long as it is a means that can convey (transfer) chained sausages. For example, it can be any means including a droop by its own weight as long as it is a means wherein sausage dough is pushed out into a natural intestine with a filling device, and by filling a fixed amount and by twisting at the same time, chained sausages are formed, and sausages are sent out from a discharge port sequentially. A conveyance conveyor which can arrange and convey chained sausages placed preferably with gently upward sloping, downward sloping or horizontally can be exemplified. Among these, a conveyance conveyor placed horizontally can be exemplified preferably. As for the above-mentioned conveyor, a conveyance conveyor transferring chained sausages by holding them between a pair of upper and lower belt conveyors or chain conveyors, or a conveyance conveyor transferring chained sausages to be placed on a belt conveyor or a chain conveyor, being guided by right and left side walls can be concretely exemplified. Transferring of chained sausages by a conveyance means such as the conveyance conveyor can be carried out sequentially as well as intermittently. Moreover, the conveying speed of the conveyance conveyor is preferably equal or a little faster than the speed of sending out chained sausages sequentially from the discharge port of the filling device.

As for the above-mentioned electrodes, it is not particularly limited for the shape or size of a plate-type electrode or a rotating disk electrode as long as electric current can be conducted between links through connecting parts. As for the electrodes, those which can be contacted with two or more links respectively connected through connecting parts of chained sausages to be conveyed are preferable. However, in case of Vienna sausages of sheep guts casings or the like, as the length or width of a link varies, it is generally preferable to set the prescribed interval as a distance between electrodes being equal or shorter than the length of a shortest link. As for plural electrodes set at such prescribed interval, for example, two electrodes placed at a prescribed interval so that they can contact with the two adjacent links (L1 and L2, L2 and L3 or the like) of chained sausages (L1-L2-L3-L4···) respectively; two electrodes placed at double interval of a prescribed interval so that they can contact with two links (L1 and L3, L2 and L4 and the like) which are connected with skipping one link of chained sausages, respectively; and three electrodes placed at a prescribed interval so that they can contact with three successive links (L1, L2 and L3; L2, L3 and L4 and the like) respectively, can be exemplified. It is possible to further increase the number of electrodes, for example, four or more.

When two electrodes placed at a prescribed interval are used so that they can contact with two adjacent links of above-mentioned chained sausages respectively, a link of each sausage can be manufactured. When chained sausages are conveyed continuously at a prescribed speed and electric current is conducted continuously, a link of each sausage can be manufactured continuously. For example, when sausages are conveyed continuously a distance being three to seven times the sum of the length of the link and the connecting part in one second, three to seven links can be manufactured in one second. Moreover, when two electrodes placed at a prescribed interval are used so that they can contact with two adjacent links of the above-mentioned sausages, respectively, to fusion cut between the links (for example, between L1 and L2, between L3 and L4, between L5 and L6 and the like) at a prescribed interval of chained sausages (L1-L2-L3-L4-L5-L6···) being conveyed intermittently, a prescribed number (for example, two) of link connected bodies can be manufactured. As for a prescribed number of link connected bodies, a link connected body made from two to five links can be exemplified. Moreover in case where two electrodes placed at double interval of a prescribed interval are used so that they can contact with two links (L1 and L3, L2 and L4 and the like) respectively which are connected with skipping one link of chained sausages, two connecting parts in series exist between electrodes, but in many cases, only one side is cut. Furthermore, when four connected-links of chained sausages are contacted with a positive pole and a negative pole with skipping one link (L1 and L3 with positive poles; L2 and L4 with negative poles), three fusion cut links can be manufactured simultaneously.

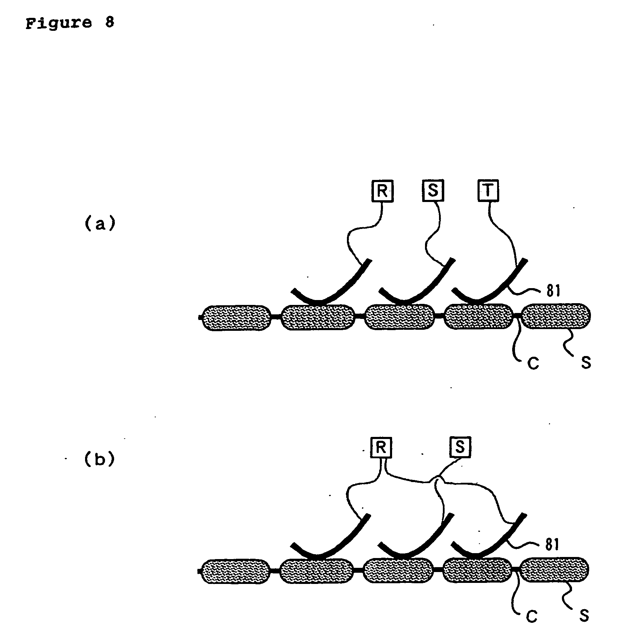

As for an electric power which conducts electric current between links by electrodes, either an alternating current electric power or a direct current electric power can be used, but the alternating current electric power is preferable in consideration of simplicity of power supply. When three electrodes placed at an interval being the sum of the length of a link and connecting part are used in order to contact with the three successive links (L1, L2 and L3; L2, L3 and L4 and the like) of chained sausages, respectively, a single-phase alternating current electric power can be used as it is shown in Fig. 8(b). However, as it is shown in Fig. 8(a), it is preferable to use a three-phase alternating current electric power in consideration of certainty of cutting and improvement of processing ability. As for conditions of conducting electric current, it can be exemplified by application of 50-800 volts, preferably 100-300 volts and more preferably around 200 volts between links. For example, single-phase 200V can fusion cut faster than single-phase 100V and furthermore, three-phase 200V can fusion cut faster than single-phase 200V. Though the frequency is not particularly limited as long as fusion cutting is possible, when the frequency becomes high, dielectric loss becomes large. Therefore, 50-10k Hz is preferable.

Further, the fusion cutting device for cutting connecting parts of chained sausages of the present invention preferably comprises a fusion cutting detecting mechanism, for example, an electric current detecting sensor that can detect whether the fusion cutting of connecting parts between links of chained sausages is carried out or not through the current-carrying condition between the electrodes. When the electric current is conducted between links, connecting parts are fusion cut and the electric current detecting sensor detects that no electric current is being conducted. However, when connecting parts are not fusion cut, the electric current detecting sensor detects that the electric current is being conducted. Therefore, in case the electric current detecting sensor detects that the electric current is being conducted, it is possible to detect the presence of connected parts between links which are not fusion cut. It is preferable that a controlling mechanism that controls the driving of the conveyor through the output signal that is sent from the electric current detecting sensor which shows whether the electric current is being conducted or not, is provided, as it can eliminate link connected bodies of insufficient fusion cutting. By providing the controlling mechanism that controls by conducting the electric current again between links when the output result from the fusion cutting detecting mechanism, for example, such as the electric current detecting sensor shows that "the electric current is on", and by conveying chained sausages through the conveying means such as the conveyance conveyor when the output result shows that "the electric current is off", link connected bodies of insufficient fusion cutting will be automatically eliminated.

As for a machine for manufacturing sausages of the present invention, it is not particularly limited as long as it comprises the above-mentioned fusion cutting device for cutting connecting parts of chained sausages of the present invention; the filling device installed in the upstream side of the fusion cutting device which forms chained sausages by pushing out sausage dough into a natural intestine or an artificial edible casing, and by filling a fixed amount and by twisting at the same time; and the heat treatment device of a link of sausages installed in the downstream side of the fusion cutting device mentioned above. As for the above-mentioned filling device and heat treatment device, conventionally known devices can be used. For example, as for the above-mentioned heat treatment device, a device which sequentially comprises dry unit, smoke unit, cooking and heating (cook) unit, shower cooling unit can be preferably exemplified. Moreover, in case the dough is soft, for example, as a fine mesh sausage, a preheating device can be installed between the above-mentioned filling device and the fusion cutting device for cutting connecting parts.

As for chained sausages used in a fusion cutting device for cutting connecting parts of chained sausages of the present invention and being the object of the method for manufacturing a link of each sausage or a link connected body of the present invention, there is no particular limitation and unheated raw chained sausages using natural intestines such as sheep guts casings and the like or artificial edible casings, pre-heated chained sausages, freeze-treated chained sausages, heat-treated chained sausages and the like can be used. In case when unheated raw chained sausages using natural intestines such as sheep guts and the like are used, the effect of the present invention can be revealed particularly advantageously. In other words, as pre-treatment such as pre-heating and freeze-treatment are unnecessary, and connecting parts are burnt down or fusion cut instantly by an electric current applying treatment between the links of chained sausages, it is possible to prepare continuously a link of each sausage wherein the end part of the link has an umbilicate form of 1-2 mm, or the end part of the link hardly exists, having no twisting back, and sausage dough do not overflow by being opened from the fusion cut part, at a high speed and simply. Thus, it is possible to be commercialized by itself as raw Vienna sausages, and also to perform a uniform heat-treatment without conventional loss by the drum cutter (about 2%). Therefore, as the production yield increases, the number of employees per production line of sausages can be halved, and a significant laborsaving and increase of productivity can be realized.

As for a link of each sausage or a link connected body of the present invention, anything will suffice as long as it is obtained from the above-mentioned method for manufacturing a link of each sausage or a link connected body of the present invention, wherein connecting parts between links are burnt down and the end part of the link is an umbilicate form of 1-2 mm or the end part of the link hardly exists. However, the link wherein the end part of the link is hardened from inside and has no twisting back is preferable. When electric current is conducted between links of chained sausages, Joule heat generates in connecting parts by conducting electric current from a filled sausage dough which contains salt and easily conducts electric current to connecting parts between links having large resistance, as a result, a string-form object which forms the connecting part is burned down/fusion cut, the end part of the link is an umbilicate form of 1-2 mm or the end part of the link hardly exists, and the end part of the link is hardened from inside by Joule heat so that twisting back is prevented. On the contrary, when connecting parts of chained sausages are cut with a cutter or the like, beard-form object of about 2, 3 mm- 5 mm remains at the end of the link. Not only it becomes an object of complaint as a foreign object, but also twisting back may occur by opening from the cutting part. Moreover, when sausages are cut by heating from outside, in many cases it may be not appropriate as a raw sausage due to heat denaturation of the link itself caused by heating.

### (Examples)

In the following, examples of the present invention will be explained in detail with reference to the figures. However, the technical scope of the present invention is not limited to these examples.

In figures, 1 represents a filling device, 11 represents a discharge port of a filling device, 2 represents a conveyance conveyor, 21 represents a chain conveyor, 22 represents a belt conveyor, 8 represents a fusion cutting device installed on a conveyance conveyor, 81 represents an electrode, 82 represents an electric power, 83 represents an insulating body, 9 represents a transferring conveyor, 10 represents a heat treatment device, S represents chained sausages, L represents links and C represents connecting parts of chained sausages.

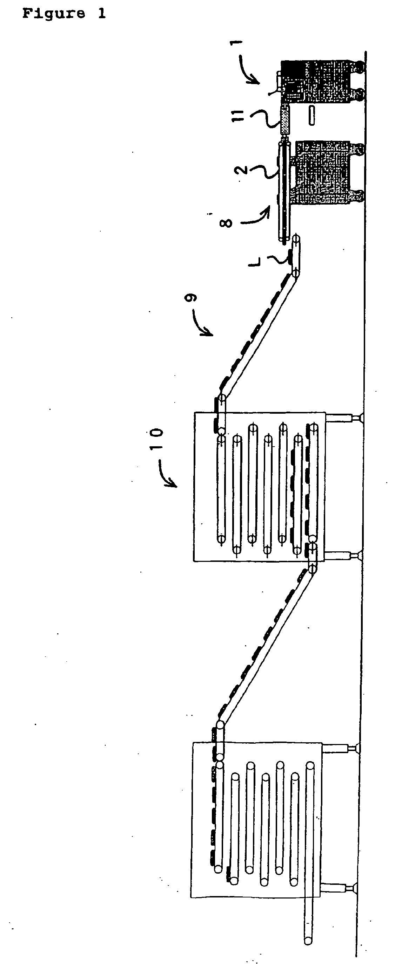

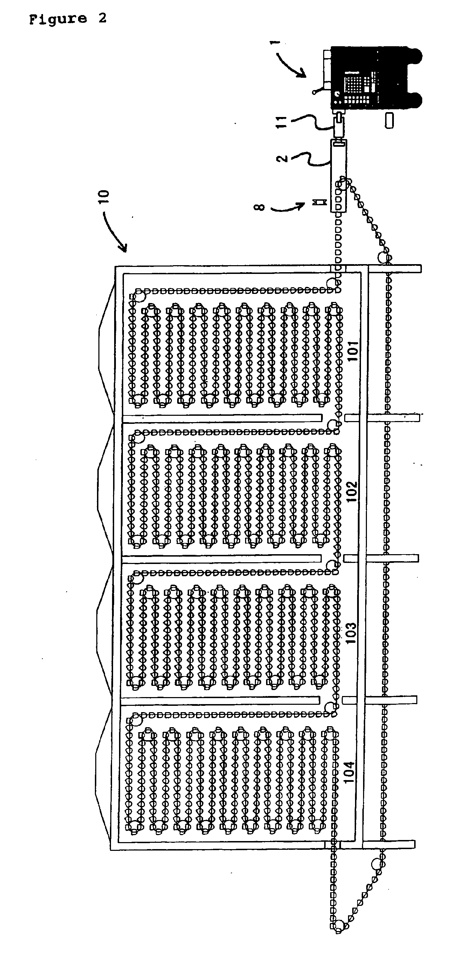

Fig.1 or Fig.2 is a view, respectively, showing a manufacturing step of sausage products by using an intermittent or a continuous fusion cutting device of the present invention. By using the filling device 1, sausage dough is pushed out into a natural intestine or an artificial edible casing, and by filling a fixed amount and by twisting at the same time, chained sausages S are formed. The chained sausages S are sent out from a discharge port 11 of the filling device of the filling device 1, placed on a conveyor 2, arranged and conveyed. Next, connecting parts C of chained sausages S being conveyed are fusion cut with the fusion cutting device 8. By contacting electrodes 81 directly with adjacent sausages S, the fusion cutting device 8 conduct electric current and burns down/fusion cut connecting parts C by using Joule heat which generates in connecting parts C of chained sausages having the largest resistance. Then a link L of each sausage being separated is heat treated continuously in a heating device 10 by being transferred, sausages are weighed and packed. The heating device shown in Fig. 2 is separated into four zones, that is, a dry zone 101, a smoke zone 102, a cook zone 103, and a shower cooling zone 104.

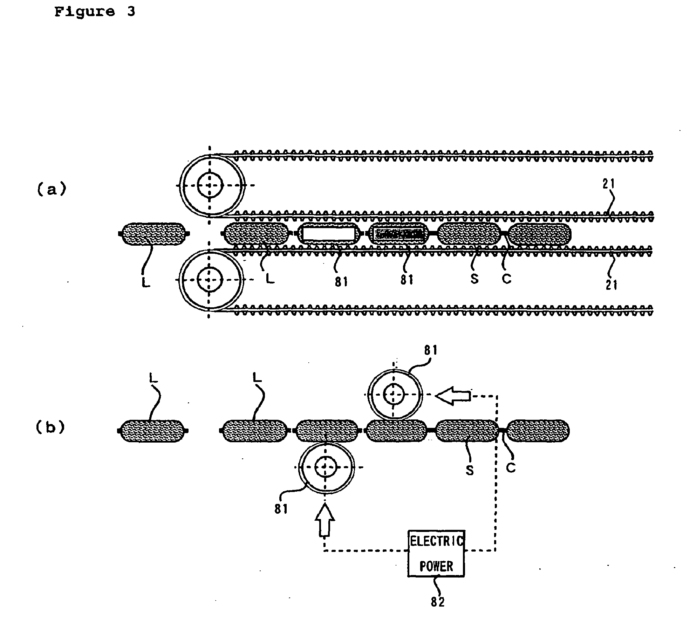

Fig. 3 is a schematic side view (a) and plan view (b) showing the fusion cutting device 8 of the present invention. Conveyance conveyors 21 being a pair of upper and lower chain conveyors type and a pair of electrodes 81 installed on the sides of the conveyors 21 are installed. Electrodes 81 are placed in order to contact with sausages S and at an interval wherein each of a pair of electrodes contacts with adjacent sausages. Electrodes 81 are connected to an electric power 82. When chained sausages S are conveyed by conveyance conveyors 21 and pass by electrodes 81, electrodes 81 contact with sausages, and electric current is conducted, so that connecting parts C of sausages are electrically cut. Meanwhile, in Fig. 3, a pair of electrodes is installed on the opposite sides of both sides with respect to the conveying direction, but it can be placed on the same side. Furthermore, though it is not shown in figures, plural pairs of electrodes can be installed. As many connecting parts C can be fusion cut at one time according to the number of pairs of electrodes.

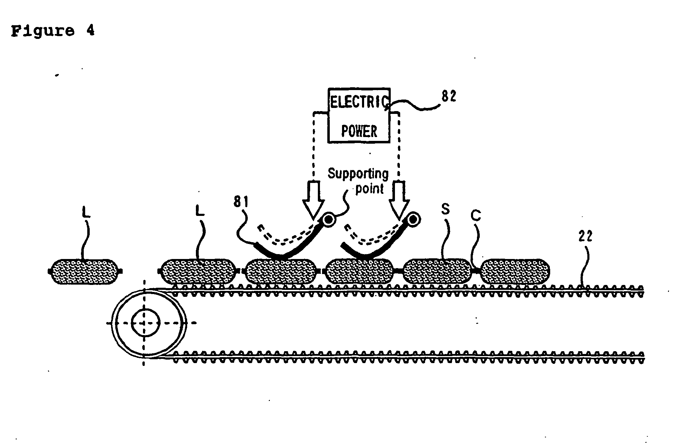

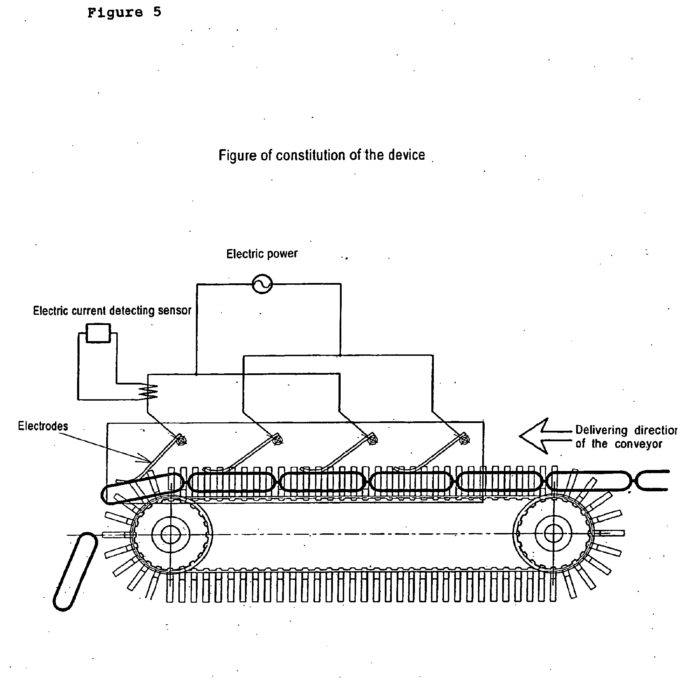

Fig. 4 is a schematic side view of another embodiment of the fusion cutting device 8 of the present invention. A conveyance conveyor 22 of a belt conveyor type and one pair of electrodes 81 installed at the upper part of the conveyor 22 are installed. Electrodes 81 are installed at the height to contact with chained sausage S and at an interval wherein each of a pair of electrodes contacts with adjacent sausages. Electrodes 81 are connected to the electric power 82. When chained sausages are conveyed by the conveyance conveyor 22 and pass under electrodes 81, electrodes 81 contact with sausages, electric current is conducted, so that connecting parts C of sausages are electrically cut. As it is shown in Fig. 5, plural pairs of electrodes can be installed. As many connecting parts C can be fusion cut at one time according to the number of pairs of electrodes.

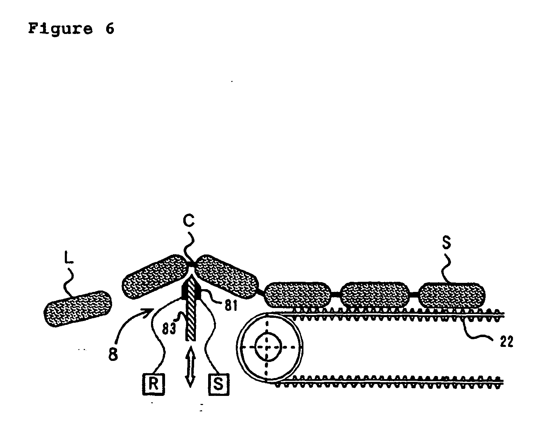

Fig. 6 is a schematic side view showing a further embodiment of the fusion cutting device 8 of the present invention. In this fusion cutting device 8, two electrodes 81 are placed on both sides through an insulating part 83. When the insulating part is attached by insertion by ascending from lower position to connecting parts of chained sausages being conveyed by the conveyance conveyor 22 of a belt conveyor type and located at outward of the end of the conveyor, two electrodes contact with two adjacent links respectively, electric current is conducted and connecting parts C are electrically cut. The operation of ascending the insulating part from lower position can be carried out either mechanically or manually. The direction which two electrodes contact with two adjacent links respectively is not limited to lower side, and can be to upper side or lateral side.

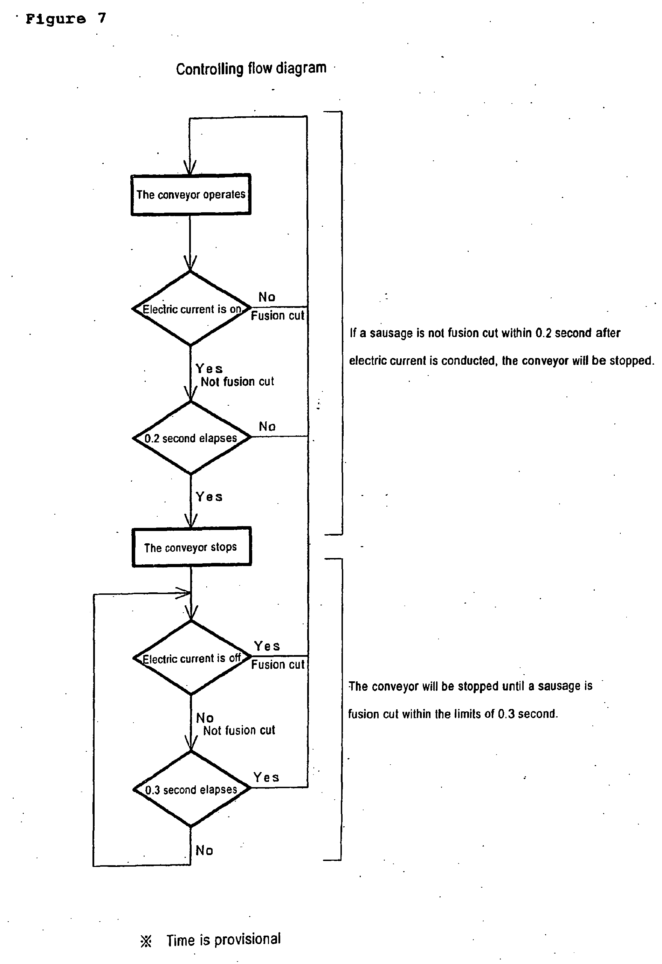

An electric current detecting sensor 84 is installed at the fusion cutting device shown in Fig. 5. A signal which shows whether the electric current is on or off from the electric current detecting sensor 84, is sent to the controlling device which is not shown in figures, and, for example, the driving of the conveyor is controlled according to the controlling flow shown in Fig. 7. An operation of the conveyor starts, and when four links on the conveyor at a delivering direction side contacts with four electrodes in which a positive pole and a negative pole are placed alternately, respectively, three connecting parts between links of sausages are fusion cut instantly, almost simultaneously by conducting the electric current. When connecting parts between links are fusion cut, the electric current is stopped being conducted between each electrode, the signal which shows that the electric current is off is sent to the controlling device through the electric current detecting sensor 84, the operation of the conveyor will start again through the command from the controlling device, and the above-mentioned fusion cutting treatment will be repeated. However, in case of raw sausages of sheep guts, connecting parts between links are irregular and it happens that connecting parts are not fusion cut in rare cases. Then the electric current is conducted between electrodes, a signal which shows that the electric current is on is sent to the controlling device through the electric current detecting sensor 84, and the electric current will be conducted between the electrodes again in a state of the conveyor being stopped through the command from the controlling device. When connecting parts between links are fusion cut by the current applying treatment (second time), the electric current is stopped being conducted between each electrode, a signal which shows that the electric current is off is sent to the controlling device through the electric current detecting sensor 84, the operation of the conveyor starts again through the command from the controlling device, and the above-mentioned fusion cutting treatment will be repeated. In case connecting parts between links can not be fusion cut through the current applying treatment (second time), further current applying treatment (third time) will be carried out in a state of conveyor being stopped. After that, this treatment will be repeated.

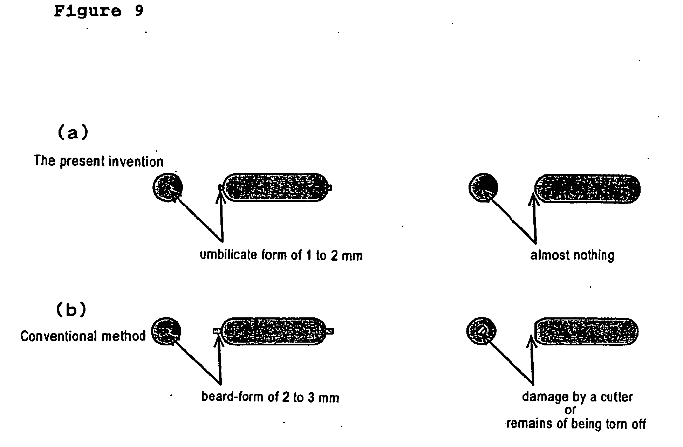

Raw Vienna sausages of sheep guts casings were prepared by using the fusion cutting device shown in Fig. 8 (a). Chained sausages being a column-like shape of diameter being 2 cm and length being 8 cm wherein twisting parts (connecting parts) were formed by rotating about 5 times, were fusion cut by using two electrodes installed on the conveyance conveyor transferring at a speed of 24 cm/second. The distance between the front and rear of two electrodes was about 8 cm. As for electrodes, titanium flat bar of 3 mm x 40 mm cross-section, 70 mm length was bent into circularly arcuate like the letter J, made into a structure to support and rotate, being able to cope with the variation of the width of sausages, was used. As for an electric power, a three-phase 200V and 50Hz commercial electric power was used. When electric current was conducted between adjacent links of chained sausages by using the electrodes and electric power, it was confirmed that chained sausages were instantly fusion cut into a link L of an individual sausage at connecting parts C of chained sausages. Moreover it was confirmed that it was effective as a manufacturing device of raw sausages, as the fusion cut part was jointed completely and no sausage dough overflowed by being opened. When the fusion cut part of the obtained link L was evaluated by visual inspection, as it is shown in Fig. 9(a), the fusion cut part was a curved surface wherein a string-form object of the connecting part having an umbilicate form of 1-2 mm or almost nothing exists and there was no fusion cutting part which opened and meat overflowed. On the other hand, the fusion cut part cut with the conventional drum cutter, as it is shown in Fig. 9(b), had a string-form object of the connecting part having a beard-form of 2-3 mm, or sausages were damaged by the cutter or damaged by being torn off.

### Industrial Applicability

According to a method for manufacturing a link of each sausage or a link connected body with using a practical fusion cutting device for cutting connecting parts of chained sausages of the present invention, it is possible to prepare a link of each sausage at good yield, with a high speed and simply wherein connecting parts of chained sausages are fusion cut after the chained sausages are formed, having no twisting back after fusion cutting and sausage dough is prevented completely from being overflowed by an opening from the fusion cut part. Therefore, a significant laborsaving and increased productivity can be realized.

## Claims

1. A device for separating linked sausages, comprising a conveying means for conveying linked sausages which are individually connected by connecting parts, **characterized in that** the device is provided with:
plural electrodes placed at a prescribed interval, to contact respectively with plural links which are connected by connecting parts of linked sausages being conveyed; and
an electric power source to conduct electric current between links by the electrodes.

2. The device for separating linked sausages according to claim 1, **characterized in that** the conveying means is a conveyance conveyor installed horizontally.

3. The device for separating linked sausages according to claim 1 or claim 2, **characterized in that** the device comprises electrodes to contact with two adjacent links respectively.

4. The device for separating linked sausages according to claim 3, **characterized in that** the electrodes to contact with two adjacent links respectively are placed on both sides of an insulating part in-between, and have a constitution that the two electrodes can contact with the two adjacent links respectively, when the insulating part is attached by insertion to a connecting parts of linked sausages.

5. The device for separating linked sausages according to claim 1 or claim 2, **characterized in that** the electric power source is a three-phase alternating current electric power source.

6. The device for separating linked sausages according to any one of claims 1 to 5, **characterized in that** the device is further provided with separation detecting mechanism which can detect whether the separation of a connecting part between linked sausages is being carried out or not by the condition of electric current conduction between the electrodes.

7. The device for separating linked sausages according to claim 6, **characterized in that** the device is further provided with a controlling mechanism that controls so that electric current is conducted again between links when an output result from the separation detecting mechanism shows that "the electric current is on", and that linked sausages are conveyed by the conveying means when the output result from the separation detecting mechanism shows that "the electric current is off".

8. A machine for manufacturing sausages **characterized in that** the machine is provided with the device for separating linked sausages according to any one of claims 1 to 7 including:
a filling device installed in the upstream side of the separation device, which forms linked sausages by pushing out and filling a fixed amount of sausage dough into a natural intestine or an artificial edible casing and by twisting the casing at the same time; and
a heat treatment device for sausage links, installed in the downstream side of the separation device.

9. A method for manufacturing an individual link or a prescribed number of connected-link body of sausage wherein individual sausage links are connected by connecting parts, by separating the connecting parts between the links of linked sausages being conveyed, **characterized in that** the individual link or a connected-link body of sausage is manufactured by conducting an electric current between the links with plural electrodes to contact respectively with plural links connected by connecting parts of linked sausages.

10. The method for manufacturing an individual link or a connected-link body of sausage according to claim 9, **characterized in that** the connecting part between two links is separated by conducting electric current to electrodes contacting with two adjacent links, respectively.

11. The method for manufacturing an individual link-or a connected-link body of sausage according to claim 9 or 10, **characterized in that** 50-800 volts are applied between links.

12. The method for manufacturing an individual link or a connected-link body of sausage according to claim 11, **characterized in that** 100-300 volts are applied between links.

13. The method for manufacturing an individual link or a connected-link body of sausage according to any one of claims 9 to 12, **characterized in that** the separation is continuously carried out during a conveying step.

14. The method for manufacturing an individual link or a connected-link body of sausage according to any one of claims 9 to 13, **characterized in that** the linked sausages are unheated linked sausages.

15. The method for manufacturing an individual link or a connected-link body of sausage according to any one of claims 9 to 14, **characterized in that** sausages are Vienna sausages with sheep guts casings.

16. The individual link or a connected-link body of sausage obtained by the method according to any one of claims 9 to 15, **characterized in that** the connecting parts between the links is burnt down such that an end part of the link is in 1-2 mm umbilicate form, or the end part of the link hardly exists.

17. The individual link or a connected-link body of sausage according to claim 16, **characterized in that** the end part of the link is hardened from inside and does not twist back.

## Patentansprüche

1. Vorrichtung zur Trennung von verbundenen Würsten, welche ein Fördermittel aufweist für das Fördern verbundener Würste, welche durch Verbindungsteile einzeln verbunden sind, **dadurch gekennzeichnet, daß** die Vorrichtung versehen ist mit:
Mehrfachelektroden, die in einem vorgeschriebenen Abstand angeordnet sind, um jeweils die Verbindung mit Mehrfachanschlüssen aufzunehmen, welche durch Verbindungsteile verbundener Würste, die gefördert werden, verbunden sind; und
einer elektrischen Kraftquelle, um elektrischen Strom zwischen Anschlüssen durch die Elektroden zu leiten.

2. Vorrichtung zum Trennen verbundener Würste nach Anspruch 1, **dadurch gekennzeichnet, daß** das Fördermittel ein Transportförderer ist, der horizontal eingebaut ist.

3. Vorrichtung zum Trennen verbundener Würste nach Anspruch 1 oder Anspruch 2, **dadurch gekennzeichnet, daß** die Vorrichtung Elektroden aufweist, um die Verbindung mit jeweils zwei benachbarten Anschlüssen aufzunehmen.

4. Vorrichtung zum Trennen verbundener Würste nach Anspruch 3, **dadurch gekennzeichnet, daß** die Elektroden, um mit jeweils zwei benachbarten Anschlüssen die Verbindung aufzunehmen, auf beiden Seiten eines isolierenden Teils dazwischen angeordnet sind und einen Aufbau haben, so daß die zwei Elektroden mit den jeweils zwei benachbarten Anschlüssen in Verbindung kommen können, wenn das isolierende Teil durch Einfügen an einem Verbindungsteil verbundener Würste angebracht ist.

5. Vorrichtung zum Trennen verbundener Würste nach Anspruch 1 oder Anspruch 2, **dadurch gekennzeichnet, daß** die elektrische Kraftquelle eine elektrische Kraftquelle mit Dreiphasen-Wechselstrom ist.

6. Vorrichtung zum Trennen verbundener Würste nach einem der Ansprüche 1 bis 5, **dadurch gekennzeichnet, daß** die Vorrichtung ferner mit einem Trennungserfassungsmechanismus versehen ist, der feststellen kann, ob die Trennung eines Verbindungsteils zwischen verbundenen Würsten ausgeführt wurde oder nicht durch den Zustand der elektrischen Stromleitung zwischen den Elektroden.

7. Vorrichtung zum Trennen verbundener Würste nach Anspruch 6, **dadurch gekennzeichnet, daß** die Vorrichtung ferner mit einem Steuermechanismus versehen ist, welcher so steuert, daß der elektrische Strom wieder zwischen Anschlüsse geleitet wird, wenn ein Ausgangsergebnis aus dem Trennungserfassungsmechanismus zeigt, daß "der elektrische Strom eingeschaltet ist" und daß verbundene Würste von dem Fördermittel gefördert werden, wenn das Ausgangsergebnis aus dem Trennungserfassungsmechanismus zeigt, daß "der elektrische Strom ausgeschaltet ist".

8. Maschine zur Herstellung von Würsten, **dadurch gekennzeichnet, daß** sie mit der Vorrichtung zum Trennen verbundener Würste nach einem der Ansprüche 1 bis 7 versehen ist mit:
einer Füllvorrichtung, die an der aufstromigen Seite der Trennvorrichtung eingebaut ist, welche verbundene Würste **dadurch** bildet, daß eine feste Menge an Wurstteig in einen Naturdarm oder eine eßbare Kunsthülle ausgestoßen und gefüllt wird, sowie durch Drehen des Gehäuses zur gleichen Zeit; und
einer Wärmebehandlungsvorrichtung für Wurstanschlüsse, die auf der abstromigen Seite der Trennvorrichtung eingebaut ist.

9. Verfahren zum Herstellen eines Wurstkörpers mit einem einzelnen Anschluß oder einer vorgeschriebenen Anzahl von verbundenen Anschlüssen, wobei einzelne Wurstanschlüsse durch Verbindungsteile **dadurch** verbunden werden, daß die Verbindungsteile zwischen den Anschlüssen verbundener, geförderter Würste getrennt werden, **dadurch gekennzeichnet, daß** der Wurstkörper mit einem einzelnen Anschluß oder mit verbundenen Anschlüssen **dadurch** hergestellt wird, daß ein elektrischer Strom zwischen die Anschlüsse mit Mehrfachelektroden geleitet wird, um jeweils mit Mehrfachanschlüssen die Verbindung aufzunehmen, welche durch Verbindungsteile verbundener Würste verbunden sind.

10. Verfahren zum Herstellen eines Wurstkörpers mit einem einzelnen Anschluß oder verbundenen Anschlüssen nach Anspruch 9, **dadurch gekennzeichnet, daß** das Verbindungsteil zwischen zwei Anschlüssen **dadurch** getrennt wird, daß elektrischer Strom zu Elektroden geleitet wird, welche die Verbindung mit zwei jeweils benachbarten Anschlüssen aufnehmen.

11. Verfahren zur Herstellung eines Wurstkörpers mit einem einzelnen Anschluß oder mit verbundenen Anschlüssen nach Anspruch 9 oder 10, **dadurch gekennzeichnet, daß** 50 - 800 Volt zwischen die Verbindungsglieder angelegt werden.

12. Verfahren zur Herstellung eines Wurstkörpers mit einem einzelnen Anschluß oder mit verbundenen Anschlüssen nach Anspruch 11, **dadurch gekennzeichnet, daß** 100 - 300 Volt zwischen den Anschlüssen angelegt werden.

13. Verfahren zur Herstellung eines Wurstkörpers mit einem einzelnen Anschluß oder verbundenen Anschlüssen nach einem der Ansprüche 9 bis 12, **dadurch gekennzeichnet, daß** die Trennung während eines Förderschrittes fortlaufend ausgeführt wird.

14. Verfahren zur Herstellung eines Wurstkörpers mit einem einzelnen Anschluß oder verbundenen Anschlüssen nach einem der Ansprüche 9 bis 13, **dadurch gekennzeichnet, daß** die verbundenen Würste ungeheizte, verbundene Würste sind.

15. Verfahren zur Herstellung eines Wurstkörpers mit einem einzelnen Anschluß oder verbundenen Anschlüssen nach einem der Ansprüche 9 bis 14, **dadurch gekennzeichnet, daß** die Würste Wiener Würste mit Schafsdarmumhüllungen sind.

16. Wurstkörper mit einem einzelnen Anschluß oder mit verbundenen Anschlüssen, welcher durch das Verfahren nach einem der Ansprüche 9 bis 15 erhalten ist, **dadurch gekennzeichnet, daß** die Verbindungsteile zwischen den Anschlüssen derart abgebrannt sind, daß ein Endteil des Anschlusses eine 1 - 2 mm Nabelform hat oder das Endteil des Anschlusses kaum vorhanden ist.

17. Wurstkörper mit einem einzelnen Anschluß oder verbundenen Anschlüssen nach Anspruch 16, **dadurch gekennzeichnet, daß** das Endteil des Anschlusses von innen gehärtet ist und sich nicht zurückdreht.

## Revendications

1. Dispositif pour séparer des saucisses en chapelet, comprenant un moyen de transport destiné à transporter des saucisses en chapelet qui sont liées individuellement par des parties de liaison, **caractérisé en ce que** le dispositif est pourvu :
de plusieurs électrodes, placées à un intervalle prescrit, servant à contacter respectivement plusieurs unités de saucisse, qui sont liées par des parties de liaison, de saucisses en chapelet en cours de transport ; et
une source d'alimentation électrique permettant, au moyen des électrodes, de faire passer un courant électrique entre des unités de saucisse.

2. Dispositif pour séparer des saucisses en chapelet selon la revendication 1, **caractérisé en ce que** le moyen de transport est un convoyeur de transport installé horizontalement.

3. Dispositif pour séparer des saucisses en chapelet selon la revendication 1 ou la revendication 2, **caractérisé en ce que** le dispositif comprend des électrodes servant à contacter respectivement deux unités de saucisse adjacentes.

4. Dispositif pour séparer des saucisses en chapelet selon la revendication 3, **caractérisé en ce que** les électrodes servant à contacter respectivement deux unités de saucisse adjacentes sont placées des deux côtés d'une partie isolante qui les sépare, et ont une structure faisant que les deux électrodes peuvent contacter respectivement les deux unités de saucisse adjacentes, lorsque la partie isolante est assujettie par insertion dans une partie de liaison de saucisses en chapelet.

5. Dispositif pour séparer des saucisses en chapelet selon la revendication 1 ou la revendication 2, **caractérisé en ce que** la source d'alimentation électrique est une source d'alimentation électrique en courant alternatif triphasé.

6. Dispositif pour séparer des saucisses en chapelet selon l'une quelconque des revendications 1 à 5, **caractérisé en ce que** le dispositif est en outre pourvu d'un mécanisme de détection de séparation qui peut détecter si la séparation d'une partie de liaison entre des saucisses en chapelet est en cours d'exécution, ou non, par l'état de conduction de courant électrique entre les électrodes.

7. Dispositif pour séparer des saucisses en chapelet selon la revendication 6, **caractérisé en ce que** le dispositif est en outre pourvu d'un mécanisme de commande qui assure une commande faisant que le courant électrique est de nouveau conduit entre des unités de saucisse lorsqu'un résultat de sortie du mécanisme de détection de séparation indique que « le courant électrique circule », et que des saucisses en chapelet sont transportées par le moyen de transport lorsque le résultat de sortie du mécanisme de détection de séparation indique que « le courant électrique ne circule pas ».

8. Machine pour fabriquer des saucisses, **caractérisée en ce que** la machine est pourvue du dispositif destiné à séparer des saucisses en chapelet selon l'une quelconque des revendications 1 à 7, incluant :
un dispositif de remplissage installé du côté amont du dispositif de séparation, qui forme des saucisses en chapelet en poussant une quantité fixe de chair à saucisse et en la chargeant dans un boyau naturel ou dans une partie de confinement artificielle comestible et en faisant tourner en même temps la partie de confinement ; et
un dispositif de traitement à la chaleur d'unités de saucisse, installé du côté aval du dispositif de séparation.

9. Procédé pour fabriquer une unité de saucisse individuelle ou un nombre prescrit de corps d'unités de saucisse liées, dans lequel des unités de saucisse individuelles sont liées par des parties de liaison, par séparation des parties de liaison qui se trouvent entre les unités de saucisse de saucisses en chapelet en cours de transport, **caractérisé en ce que** l'unité de saucisse individuelle ou un corps d'unités individuelles de saucisse liées est fabriqué par conduction, à l'aide de plusieurs électrodes, d'un courant électrique entre les unités de saucisse pour contacter respectivement plusieurs unités de saucisse, liées par des parties de liaison, de saucisses en chapelet.

10. Procédé pour fabriquer une unité de saucisse individuelle ou un corps d'unités de saucisse liées selon la revendication 9, **caractérisé en ce que** la partie de liaison qui se trouve entre deux unités de saucisse est séparée par conduction d'un courant électrique jusqu'aux électrodes qui contactent respectivement deux unités de saucisse adjacentes.

11. Procédé pour fabriquer une unité de saucisse individuelle ou un corps d'unités de saucisse liées selon la revendication 9 ou 10, **caractérisé en ce qu'**une tension de 50 à 800 volts est appliquée entre des unités de saucisse.

12. Procédé pour fabriquer une unité de saucisse individuelle ou un corps d'unités de saucisse liées selon la revendication 11, **caractérisé en ce qu'**une tension de 100 à 300 volts est appliquée entre des unités de saucisse.

13. Procédé pour fabriquer une unité de saucisse individuelle ou un corps d'unités de saucisse liées selon l'une quelconque des revendications 9 à 12, **caractérisé en ce que** la séparation est exécutée de façon continue pendant une étape de transport.

14. Procédé pour fabriquer une unité de saucisse individuelle ou un corps d'unités de saucisse liées selon l'une quelconque des revendications 9 à 13, **caractérisé en ce que** les saucisses en chapelet sont des saucisses en chapelet non chauffées.

15. Procédé pour fabriquer une unité de saucisse individuelle ou un corps d'unités de saucisse liées selon l'une quelconque des revendications 9 à 14, **caractérisé en ce que** les saucisses sont des saucisses de Vienne à parties de confinement en boyaux de mouton.

16. Unité de saucisse individuelle ou corps d'unités de saucisse liées obtenu par le procédé selon l'une quelconque des revendications 9 à 15, **caractérisé en ce que** les parties de liaison qui se trouvent entre les unités de saucisse sont brûlées complètement de sorte qu'une partie d'extrémité de l'unité de saucisse a une forme ombilicale de 1 à 2 mm, ou que la partie d'extrémité de l'unité de saucisse n'existe pratiquement pas.

17. Unité de saucisse individuelle ou corps d'unités de saucisse liées selon la revendication 16, **caractérisé en ce que** la partie d'extrémité de l'unité de saucisse est durcie depuis l'intérieur et ne se détord pas.
